# EUROPÄISCHE PATENTSCHRIFT

(11) **EP 2 545 294 B1**
(45) Veröffentlichungstag und Bekanntmachung des Hinweises auf die Patenterteilung: **30.11.2016**
(21) Anmeldenummer: 11724374.1
(22) Anmeldetag: 09.03.2011
(51) Int. Cl.: F16F 1/18, B60G 11/10, F16F 1/368

(54) **BLATTFEDER FÜR KRAFTFAHRZEUGE**
LEAF SPRING FOR MOTOR VEHICLES
RESSORT À LAME POUR VÉHICULES AUTOMOBILES

(30) Priorität: 12.03.2010 DE 102010015951
(43) Veröffentlichungstag der Anmeldung: 16.01.2013
(73) Patentinhaber: Muhr und Bender KG, 57439 Attendorn (DE)
(72) Erfinder: SCHÜRMANN, Helmut, 67133 Maxdorf (DE); KELLER, Tobias, 64390 Erzhausen (DE)
(74) Vertreter: Oberwalleney, Stephan
(86) Internationale Anmeldenummer: PCT/EP2011/053572
(87) Internationale Veröffentlichungsnummer: WO 2011/110611

(56) Entgegenhaltungen:
- EP-A1- 0 132 048
- EP-A1- 0 245 099
- EP-A2- 2 082 903
- CH-A- 319 824
- FR-A1- 2 570 032
- US-A- 1 952 718
- US-A- 4 832 320
- US-A- 4 905 972
- US-A1- 2008 252 033

## Beschreibung

Die Erfindung betrifft eine Blattfeder für Kraftfahrzeuge aus einem faserverstärkten Kunststoffmaterial, wobei die Blattfeder gegebenenfalls auftretende Seitenführungskräfte aufnehmen und auf eine Blattfederaufnahmevorrichtung übertragen kann.

Aus der US 2008/0252033 A1 ist eine Blattfeder für ein Kraftfahrzeug aus einem faserverstärkten Kunststoffmaterial bekannt. Die Federenden sind in einem elastischen Element aufgenommen. Das elastische Element umfasst eine Lagerbuchse, die eine Innenhülse aus Metall, eine Außenhülse aus Metall und eine dazwischen liegende elastische Hülse aus Gummi oder einem anderen elastischen Polymermaterial, beinhaltet. Das Federende hat eine Bohrung, in welcher die Lagerbuchse aufgenommen ist. Die Bohrung des Federendes definiert dabei eine Längsachse, um welche das Federende schwenken oder rotieren kann.

Aus der EP 0 132 048 A1 ist eine Wellenfeder aus faserverstärktem Kunststoff bekannt mit vier Wellenzügen, die an ihren oberen und unteren Enden miteinander verbunden sind.

Aus der US 1 952 718 A ist eine Blattfeder aus Metall bekannt. Das vordere Ende der Blattfeder ist über ein flaches flexibles Verbindungsstück an einem Träger angebracht. Das hintere Ende ist über ein flexibles Verbindungsstück mit einem hinteren Trägerteil verbunden.

Blattfedern werden seit langer Zeit in einem großen Umfang zur Federung von Fahrzeugen verwendet. Sie sollen gewährleisten, dass die Räder des Fahrzeugs den Fahrbahnunebenheiten folgen und nachgeführt werden, ohne dass das gesamte Fahrzeug übermäßigen Beschleunigungen ausgesetzt wird. Im Vergleich zu anderen Federungsvorrichtungen weisen die sehr kostengünstig herstellbaren Blattfedern allerdings einen geringen Federungskomfort und eine lediglich eingeschränkte Verbesserung der Fahrsicherheit auf, so dass Blattfedern derzeit üblicherweise nur noch bei Lastkraftwagen und Kleintransportern eingesetzt werden. Blattfedern für Kraftfahrzeuge werden üblicherweise mit einer gekrümmten Formgebung versehen und oftmals so ausgelegt, dass die unbelastet in einem gekrümmten Zustand befindliche Blattfeder durch eine vorgegebene Belastung in eine im Wesentlichen ebene, bzw. flache Formgebung verbogen wird. Durch eine Änderung der Belastung wird die Blattfeder dann aus dieser näherungsweisen geraden Formgebung ausgelenkt, bzw. verformt.

Durch das Geradebiegen wird die ursprünglich gekrümmt vorgegebene Blattfeder gestreckt, so dass die beiden Enden der Blattfeder sich auseinanderbewegen und die resultierenden Hebelarme für die angreifenden Kräfte größer werden. Aus diesem Grund ist die Federrate, bzw. die Rückstellkraft bei einer Verformung aus der vorgespannten, geraden Formgebung gegenüber einer Verformung aus dem unbelasteten, gekrümmten Zustand geringer. Die mit zunehmender Verformung von dem gekrümmten Zustand hin zu dem geraden Zustand der Blattfeder geringer werdende Rückstellkraft, die einer weiteren Verformung entgegenwirkt, kann auch durch eine degressive Kraft-WegKennlinie beschrieben werden.

Die Blattfeder wird oftmals so ausgestaltet und angeordnet, dass sie durch die Gewichtskraft des voll beladenen Kraftfahrzeugs näherungsweise in eine gerade, bzw. ebene Formgebung verformt wird. Dadurch kann verhindert werden, dass bei einem voll beladenen Zustand eines Kraftfahrzeugs die ansonsten schon stark gekrümmte Blattfeder überdehnt und gegebenenfalls beschädigt wird oder aber schon bei geringen Fahrbahnunebenheiten an einem Federwegsbegrenzer anschlägt. Allerdings hat die unbelastet gekrümmte Ausgestaltung auch zur Folge, dass sich die Blattfeder bei einem unbeladenen Zustand des Kraftfahrzeugs wieder in die Ausgangsform zurück krümmt und die Rückstellkraft, bzw. die Federrate zunimmt. Im unbeladenen Zustand ist die Federwirkung der dann gekrümmten Blattfeder regelmäßig zu stark, bzw. zu hart, so dass die Fahrdynamik und der Fahrkomfort stark eingeschränkt werden.

Um bei einer Verformung der Blattfeder aus einem gekrümmten, unbelasteten Zustand in einen im Wesentlichen ebenen, belasteten Zustand die dadurch bewirkte Längenänderung der Blattfeder ausgleichen zu können, weist die Blattfeder an beiden Enden üblicherweise Ösen bzw. Federaugen auf. Über die Federaugen kann die Blattfeder an Haltebolzen befestigt werden, die in Längsrichtung, bzw. in Richtung der Erstreckung der Blattfeder verlagerbar und üblicherweise schwenkbar gelagert sind. Bei einer Längenänderung der Blattfeder infolge einer belastungsbedingten Verformung der Blattfeder kann durch eine Verlagerung der Haltebolzen diese Längenänderung der Blattfeder ausgleichen werden. Da die Blattfeder Ösen oder Federaugen aufweisen muss und die Lagerung derartiger Blattfedern verlagerbare Haltebolzen erfordert, erfordert eine derartige Befestigung der Blattfeder an einem Fahrzeug oder dergleichen einen erheblichen Aufwand und damit einhergehend hohe Herstellungskosten.

Allerdings verändern sich mit der Länge auch die wirksamen Hebelarme der Blattfeder und damit einhergehend die durch die Blattfeder erzeugten Rückstellkräfte. Die meisten einfachen Blattfedern weisen in dem nutzungsrelevanten Verformungsbereich eine degressive Kraft-Weg-Kennlinie auf. Eine Federung mit einer degressiven Kraft-Weg-Kennlinie ist jedoch im Bereich der Federungen von Kraftfahrzeugen oftmals nachteilig und unerwünscht. Um einen progressiven Verlauf der Kraft-Weg-Kennlinie zu ermöglichen, können auch Blattfedern verwendet werden, die aus mehreren Federblättern zusammengesetzt werden, die jeweils in geeigneter Weise ausgestaltet und miteinander verbunden bzw. in einem Federblattverbund angeordnet sind. Die Herstellung und Montage von mehrblättrigen Blattfedern ist jedoch mit einem zusätzlichen Aufwand und mit hohen Kosten verbunden.

Es wird deshalb als eine Aufgabe der vorliegenden Erfindung angesehen, eine Blattfeder der eingangs genannten Gattung so auszugestalten, dass mit möglichst geringem Herstellungs- und Kostenaufwand eine Blattfeder mit möglichst guten Federungseigenschaften für Kraftfahrzeuge hergestellt und an dem Kraftfahrzeug befestigt werden kann.

Diese Aufgabe wird erfindungsgemäß dadurch gelöst, dass ein erstes Ende und ein zweites Ende der Blattfeder momentenfest und verschiebungsfest in einer Blattfederaufnahmevorrichtung festgelegt sind, und dass die Blattfeder einen Biegegelenkabschnitt aufweist, der eine Längenänderung eines Federungsabschnitts der Blattfeder bei einer belastungsbedingten Verformung des Federungsabschnitts ausgleichen kann. Durch die momentenfeste und verschiebungsfeste Festlegung der beiden Enden der Blattfeder beispielsweise an einem Kraftfahrzeug wird bei einer belastungsbedingten Verformung der Blattfeder nicht nur eine Biegebelastung quer zu der Längsrichtung der Blattfeder erzeugt, sondern auch eine Zugbelastung in Längsrichtung der Blattfeder hervorgerufen. Diese Zugbelastung wird durch eine Längenänderung des quer zu der Längsrichtung verformten Federungsabschnitts hervorgerufen und kann durch eine daran angepasste Verformung des Biegegelenkabschnitts ausgeglichen werden.

Ohne einen Biegegelenkabschnitt würde einer geringen Auslenkung bzw. Verformung der Blattfeder unter Belastung bereits eine sehr hohe Rückstellkraft entgegenwirken. Eine merkliche Längenänderung der Blattfeder würde aufgrund der verschiebungsfesten Festlegung der Blattfeder in der Blattfederaufnahmevorrichtung verhindert werden, so dass, mit einer fest eingespannten Blattfeder, wie sie aus dem Stand der Technik bereits bekannt ist, keine vorteilhaften Federungseigenschaften erreicht werden können. Im Gegensatz dazu kann bei der erfindungsgemäßen Ausgestaltung der Blattfeder eine Längenänderung in dem Federungsabschnitt der Blattfeder, die bei einer belastungsbedingten Verformung quer zu der Längserstreckung des Federungsabschnittes erzwungen wird, durch eine daran angepasste Verformung des Biegegelenkabschnitts kompensiert werden. Dabei wird der Biegegelenkabschnitt der Blattfeder entgegen einer Rückstellkraft verformt. Durch die Formgebung und Ausgestaltung des Biegegelenkabschnitts können die einer belastungsbedingten Verformung des Federungsabschnitts entgegenwirkenden Rückstellkräfte und damit die Federungseigenschaften der Blattfeder innerhalb eines großen Bereichs vorgegeben werden. Insbesondere ist es auch möglich, der Blattfeder eine progressive Federrate, bzw. eine progressive Kraft-Weg-Kennlinie vorzugeben, wie sie insbesondere für eine Verwendung der Blattfeder zur Federung von Kraftfahrzeugen von Vorteil ist.

Vorzugsweise ist vorgesehen, dass die Blattfeder einen ersten Federschenkel und einen zweiten Federschenkel aufweist, die über einen Übergangsabschnitt miteinander verbunden sind. Die beiden Federschenkel können in einem unbelasteten Zustand jeweils näherungsweise eben sein. Es hat sich gezeigt, dass im Wesentlichen eben, bzw. gerade verlaufende Federschenkel kostengünstig hergestellt und raumsparend angeordnet werden können. Im Gegensatz zu einer üblicherweise kontinuierlich gekrümmten Ausgestaltung einer aus dem Stand der Technik bekannten Blattfeder können dennoch gute Federungseigenschaften für die Blattfeder ermöglicht werden.

Es ist ebenfalls denkbar und im Hinblick auf einen verbesserten Federungskomfort vorteilhaft, dass mindestens ein Federschenkel eine zumindest abschnittsweise gekrümmte Formgebung aufweist. Bei einer geeigneten Ausgestaltung der Krümmung des Federschenkels kann erreicht werden, dass die für die Federwirkung verantwortlichen Rückstellkräfte sowohl von einer Biegebelastung bei der Verformung des gekrümmten Federschenkels als auch von einer Zugbelastung durch eine Längenänderung des verformten Federschenkels verursacht werden. Die Kraft-Weg-Kennlinie einer derartigen Blattfeder kann zunächst bei geringer Belastung und überwiegender Biegebelastung einen flachen Verlauf aufweisen, wodurch eine angenehm weiche Federung bewirkt wird. Anschließend kann bei stärkerer Belastung ein überproportional zunehmender Anteil der Rückstellkraft durch die Zugbelastung verursacht werden, so dass die Kraft-Weg-Kennlinie zunehmend steiler ansteigt und eine progressive Kennlinie vorliegt.

Ein Biegegelenkabschnitt lässt sich in einfacher Weise dadurch an der Blattfeder ausbilden, dass der erste Federschenkel und der zweite Federschenkel in einem Winkel relativ zueinander angeordnet sind. In dem die beiden Federschenkel verbindenden Übergangsabschnitt weist die Blattfeder dem zufolge einen gekrümmten Verlauf auf. Aufgrund der einen winkel zueinander aufweisenden Ausrichtung der beiden Federschenkel kann eine Längenänderung eines Federschenkels durch eine Biegeverformung des anderen Federschenkels ausgeglichen werden. Die Blattfeder kann in dem Übergangsabschnitt ebenfalls verformbar ausgestaltet sein. Der Übergangsabschnitt könnte alternativ hierzu auch durch ein steifes, bzw. formstabiles Übergangselement gebildet werden, dass an beiden Enden jeweils gelenkig an den Federschenkeln gelagert ist.

Gemäß einer Ausgestaltung des Erfindungsgedankens ist vorgesehen, dass der erste Federschenkel den Federungsabschnitt bildet. In einem mittleren Bereich des ersten Federschenkels ist zweckmäßigerweise die Wirkverbindung zu dem zugeordneten Rad eines Kraftfahrzeugs angeordnet, so dass im Falle einer Belastung des Federungsabschnitts eine Längenänderung des ersten Federschenkels erzwungen wird. Diese Längenänderung des ersten Federschenkels muss zumindest teilweise durch eine Verbiegung des zweiten Federschenkels ausgeglichen werden, der in einem Winkel relativ zu dem ersten Federschenkel angeordnet ist. Zweckmäßigerweise beinhaltet der Biegegelenkabschnitt der Blattfeder den zweiten Federschenkel. Auch der Übergangsabschnitt kann hinsichtlich seiner Verformbarkeit, bzw. hinsichtlich seiner einer Längenausgleich des Federungsabschnitts begünstigenden Wirkung dem Biegegelenkabschnitt der Blattfeder zugeordnet werden.

Untersuchungen haben ergeben, dass es für die meisten Anwendungsfälle von Vorteil ist, wenn der zweite Federschenkel kürzer als der erste Federschenkel ist. Auch bei einem vergleichsweise großen Federweg, der für eine belastungsbedingte Verformung des Federungsabschnitts quer zu dessen Längsrichtung vorgegeben, bzw. zugelassen wird, ändert sich die Länge des Federungsabschnitts vergleichsweise gering und kann auch durch einen kurzen Biegegelenkabschnitt kompensiert werden. Für die Federeigenschaften der Blattfeder sind das Verhältnis der vorzugsweise unterschiedlichen Längen der beiden Federschenkel sowie die Ausgestaltung des Übergangsabschnitts zwischen den Federschenkeln von besonderer Bedeutung.

Zudem kann es zweckmäßig sein, wenn zumindest der erste Federschenkel einen geringfügig gekrümmten Verlauf aufweist, da bei einem vollständig ebenen Federschenkel die Federkennlinie für die meisten Anwendungsfälle zu progressiv verlaufen würde.

Je länger der kurze zweite Federschenkel relativ zu dem längeren ersten Federschenkel ist, desto geringer ist dessen Rückstellkraft, die einer belastungsbedingten Verformung bzw. Längenänderung des ersten Federschenkels entgegenwirkt. In diesem Fall verläuft die Kraft-Weg-Kennlinie der Blattfeder zumindest am Anfang entsprechend flacher.

Einer Ausgestaltung des Erfindungsgedankens zufolge ist vorgesehen, dass der zweite Federschenkel nährungsweise senkrecht zu dem ersten Federungsschenkel angeordnet ist. Der zweite Federschenkel kann auch einen stumpfen Winkel relativ zu dem ersten Federschenkel aufweisen. Bei einer ebenfalls denkbaren parallelen Ausrichtung des zweiten Federschenkels relativ zu dem ersten Federschenkel muss ein Längenausgleich des sich belastungsbedingt verformenden ersten Federschenkels im Wesentlichen durch eine daran angepasste Verformung eines deshalb merklich gekrümmten Übergangsabschnitts gewährleistet werden. Der zweite Federschenkel kann dann nicht nennenswert zu dem Längenausgleich beitragen. Vorzugsweise ist vorgesehen, dass die Blattfeder im Bereich des Übergangsabschnitts und gegebenenfalls im Bereich des ersten Federschenkels eine Einschnürung aufweist. Durch die mindestens eine Einschnürung können die für die Seitenführungseigenschaften der Blattfeder maßgeblichen Rückstellkräfte, die bei einer Querverlagerung des Fahrzeugs relativ zu dem gefederten Reifen entstehen, einfach und in kostengünstiger Weise vorgegeben, bzw. beeinflusst werden.

Gemäß einer besonders vorteilhaften Ausgestaltung des Erfindungsgedankens ist vorgesehen, dass die Blattfeder einstückig hergestellt ist. Das Verfügen, bzw. montieren mehrerer Einzelteile zu einer Blattfeder wird dadurch vermieden, bzw, überflüssig. Durch die einstückige Ausgestaltung der Blattfeder werden eine Schwächung der mechanischen Festigkeit der Blattfeder durch Fügestellen oder eine Befestigung einzelner Bauteile miteinander vermieden und nachteilige Auswirkungen, bzw. eine Beeinträchtigung der Federungseigenschaften verhindert.

Einem besonders einfachen und kostengünstigen Herstellungsverfahren zufolge ist vorgesehen, dass die Blattfeder aus unidirektionalen vorimprägnierten Fasern, sogenannten Prepregs, mit duroplastischer oder thermoplastischer Matrix im Pressverfahren hergestellt wird. Auf diese Weise kann zuverlässig und kostengünstig die gewünschte Formgebung der Blattfeder im unbelasteten Zustand vorgegeben und erreicht werden.

Nachfolgend werden Ausführungsbeispiele des Erfindungsgedankens näher erläutert, die in der Zeichnung dargestellt sind. Es zeigt:
- Figur 1: eine schematische Darstellung einer erfindungsgemäßen Blattfeder, und
- Figur 2: eine perspektivische Darstellung einer Blattfeder für ein Kraftfahrzeug.

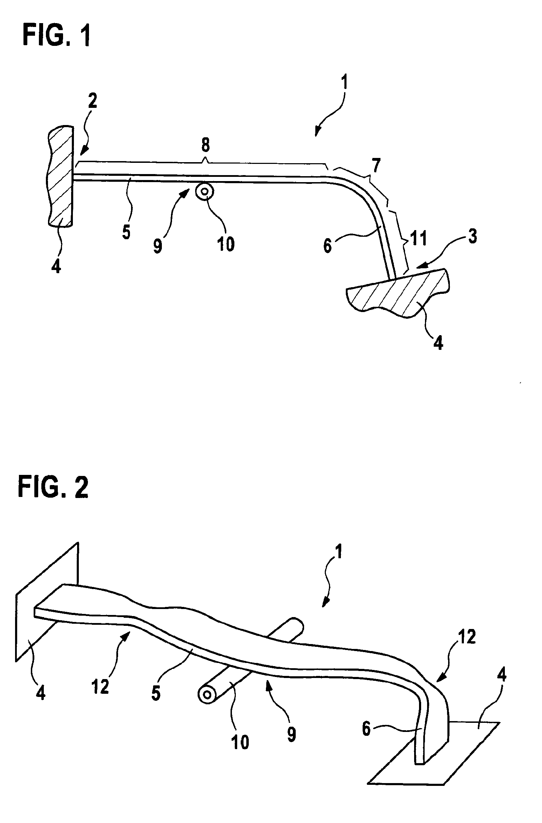

Eine in Figur 1 exemplarisch und nur schematisch dargestellte Blattfeder 1 ist an einem ersten Ende 2 und an einem zweiten Ende 3 jeweils momentenfest und verschiebungsfest an einer nicht näher dargestellten Blattfederaufnahmevorrichtung 4 festgelegt. Eine Verformung oder Verlagerung des ersten Endes 2 oder des zweiten Endes 3 relativ zu der jeweils zugeordneten Blattfederaufnahmevorrichtung 4 ist durch die momentenfeste und verschiebungsfeste Festlegung ausgeschlossen.

Die Blattfeder 1 weist einen ersten Federschenkel 5 und einen zweiten Federschenkel 6 auf, die über einen Übergangsabschnitt 7 miteinander verbunden sind. In dem Übergangsabschnitt 7 weist die Blattfeder 1 einen gekrümmten Verlauf auf, so dass der zweite Federschenkel 6 in einem Winkel relativ zu dem ersten Federschenkel 5 ausgerichtet ist. Bei dem schematisch in Figur 1 dargestellten Ausführungsbeispiel weist der zweite Federschenkel 6 einen Winkel von weniger als 90°, bzw. etwa 80° relativ zu dem ersten Federschenkel 5 auf.

Der erste Federschenkel 5 bildet einen Federungsabschnitt 8, dessen mittlerer Bereich 9 mit einer Nabe oder Radachse 10 in Wirkverbindung steht und im Falle einer Belastung durch die Nabe 10 quer zu der Längsrichtung des ersten Federschenkels 5 ausgelenkt und verformt wird. Durch eine Belastung wird in dem mittleren Bereich 9 eine Verformung des Federungsabschnitts 8 erzwungen. Dadurch wird dessen Länge verkürzt und ein dem Übergangsabschnitt 7 zugewandtes Ende des Federungsabschnitts 8 in Richtung des anderen Endes gezogen und verlagert, dass an der Befestigungsvorrichtung 4 verschiebungsfest festgelegt ist.

Die Längenänderung des Federungsabschnitts 8 wird durch eine Biegeverformung des zweiten Federschenkels 6 ausgeglichen, der zusammen mit dem ebenfalls geringfügig verformbaren Übergangsabschnitt 7 einen Biegegelenkabschnitt 11 bildet.

Das in Figur 2 näherungsweise realistisch dargestellte Ausführungsbeispiel der Blattfeder 1 weist einen kurzen zweiten Federschenkel 6 und einen mehr als zehn Mal längeren ersten Federschenkel 5 auf. Der zweite Federschenkel 6 ist näherungsweise rechtwinklig zu dem ersten Federschenkel 5 angeordnet, bzw. ausgerichtet. Der erste Federschenkel 5 weist dem mittleren Bereich 9 eine leicht konvex gekrümmte Formgebung auf. die konvex gekrümmte Formgebung ist für die Federungseigenschaften vorteilhaft. Bei einer belastungsbedingten Verformung in einen vollständig ebenen Zustand bis hin zu einer vergleichbaren, jedoch konkaven Krümmung findet lediglich eine geringe Längenänderung statt, die durch eine Verformung des Biegegelenkabschnitts 11 ohne größere Zugbelastung, bzw. ohne entsprechende Rückstellkräfte ausgeglichen werden kann.

Sowohl in dem Übergangsabschnitt 7 als auch in einem gegenüberliegenden Endbereich des ersten Federschenkels 5 ist jeweils eine Einschnürung 12 vorgesehen, die sich vorteilhaft auf die Seitenführungseigenschaften dieser Blattfeder 1 auswirken.

Die Blattfeder 1 ist aus einem faserverstärkten Kunststoffmaterial einstückig hergestellt. Durch Verpressen von unidirektionalen Prepregs mit einer duroplastischen oder thermoplastischen Matrix kann die Blattfeder 1 mit der in den beiden Figuren exemplarisch dargestellten Formgebung einfach und kostengünstig hergestellt werden. Durch die kurzen Abmessungen des zweiten Federschenkels 6 relativ zu dem näherungsweise senkrecht dazu angeordneten ersten Federschenkel 5 wird eine hohe Rückstellkraft erzwungen, die eine Verformung, bzw. eine Längenänderung des ersten Federschenkels 5, bzw. des Federungsabschnitts 8 entgegenwirkt und harte Federungseigenschaften vorgibt.

Das erste Ende 2 und das zweite Ende 3 der Blattfeder 1 müssen keine Federaugen aufweisen, sondern können beispielsweise kostengünstig als zungenförmige Endbereiche der im Wesentlichen bandförmig ausgestalteten, einen gekrümmten Verlauf aufweisenden Blattfeder 1 ausgestaltet sein. Auf die Verwendung von kostspielig herzustellenden Federaugen an den Enden 2, 3 der Blattfeder 1 kann verzichtet werden. Insbesondere in Verbindung mit der nahezu als zwingend notwendig erachteten Herstellung der Blattfeder 1 aus einem faserverstärkten KunststoffVerbundmaterial kann ein äußerst geringes Gesamtgewicht der Blattfeder 1, bzw. der diese Blattfeder 1 aufweisenden Federungseinrichtung für ein Kraftfahrzeug ermöglicht werden.

## Patentansprüche

1. Blattfeder für Kraftfahrzeuge aus einem faserverstärktem Kunststoffmaterial, wobei die Blattfeder gegebenenfalls auftretende Seitenführungskräfte aufnehmen und auf eine Blattfederaufnahmevorrichtung übertragen kann, **dadurch gekennzeichnet, dass** ein erstes Ende (2) und eine zweites Ende (3) der Blattfeder (1) momentenfest und verschiebungsfest in einer Blattfederaufnahmevorrichtung (4) festgelegt sind und dass die Blattfeder (1) einen Biegegelenkabschnitt (11) aufweist, der eine Längenänderung eines Federungsabschnitts (8) der Blattfeder (1) bei einer belastungsbedingten Verformung des Federungsabschnitts (8) ausgleichen kann.

2. Blattfeder nach Anspruch 1, **dadurch gekennzeichnet, dass** die Blattfeder (1) einen ersten Federschenkel (5) und einen zweiten Federschenkel (6) aufweist, die über einen Übergangsabschnitt (7) miteinander verbunden sind.

3. Blattfeder nach Anspruch 2, **dadurch gekennzeichnet, dass** der erste Federschenkel (5) und der zweite Federschenkel (6) in einem unbelasteten Zustand jeweils näherungsweise eben sind.

4. Blattfeder nach Anspruch 2 oder Anspruch 3, **dadurch gekennzeichnet, dass** der erste Federschenkel (5) und der zweite Federschenkel (6) in einem Winkel relativ zueinander angeordnet sind.

5. Blattfeder nach einem der Ansprüche 2 bis 4, **dadurch gekennzeichnet, dass** der erste Federschenkel (5) den Federungsabschnitt (8) bildet.

6. Blattfeder nach einem der Ansprüche 2 bis 5, **dadurch gekennzeichnet, dass** der Biegegelenkabschnitt (11) den zweiten Federschenkel (6) beinhaltet.

7. Blattfeder nach einem der Ansprüche 2 bis 6, **dadurch gekennzeichnet, dass** der zweite Federschenkel (6) kürzer als der erste Federschenkel (5) ist.

8. Blattfeder nach einem der Ansprüche 2 bis 7, **dadurch gekennzeichnet, dass** der zweite Federschenkel (6) näherungsweise senkrecht zu dem ersten Federschenkel (5) ausgerichtet ist.

9. Blattfeder nach einem der vorangehenden Ansprüche, **dadurch gekennzeichnet, dass** die Blattfeder (1) im Bereich des Übergangsabschnitts (7) und gegebenenfalls im Bereich des ersten Federschenkels (5) eine Einschnürung (12) aufweist.

10. Blattfeder nach einem der vorangehenden Ansprüche, **dadurch gekennzeichnet, dass** die Blattfeder (1) einstückig hergestellt ist.

11. Blattfeder nach einem der vorangehenden Ansprüche, **dadurch gekennzeichnet, dass** die Blattfeder (1) mittels eines Pressverfahrens aus unidirektionalen Prepregs mit einer duroplastischen oder thermoplastischen Matrix hergestellt ist.

12. Blattfeder nach einem der vorangehenden Ansprüche, **dadurch gekennzeichnet, dass** in der Blattfeder (1) bei belastungsbedingter Verformung eine Biegebelastung quer zur Längsrichtung der Blattfeder (1) und eine Zugbelastung in Längsrichtung der Blattfeder (1) erzeugt wird.

13. Blattfeder nach einem der vorangehenden Ansprüche, **dadurch gekennzeichnet, dass** die Blattfeder (1) genau einen Biegegelenkabschnitt (11) aufweist.

14. Blattfeder nach einem der vorangehenden Ansprüche, **dadurch gekennzeichnet, dass** das erste Ende (2) und das zweite Ende (3) der Blattfeder (1) als zungenförmige, federaugenfreie Endbereiche gestaltet sind.

## Claims

1. A leaf spring for motor vehicles, made of fibre-reinforced plastics, wherein the leaf spring is capable of accommodating potential lateral guiding forces and transferring same to a leaf spring receiving device, **characterised in that** a first end (2) and a second end (3) of the leaf spring (1) are fixed in a moment-resistant and non-displaceable way in a leaf spring receiving device (4) and that the leaf spring (1) comprises bendable joint portion (11) which can compensate for a change in length of a spring portion (8) of the leaf spring (1) in the case of a load-induced deformation of the spring portion (8).

2. A leaf spring according to claim 1, **characterised in that** the leaf spring (1) comprises a first spring leg (5) and a second spring leg (6) which are connected to one another via a transition portion (7).

3. A leaf spring according to claim 2, **characterised in that**, in a load-free condition, the first spring leg (5) and the second spring leg (6) are substantially planar.

4. A leaf spring according to claim 2 or claim 3, **characterised in that** the first spring leg (5) and the second spring leg (6) are arranged at an angle relative to one another.

5. A leaf spring according to any one of claims 2 to 4, **characterised in that** the first spring leg (5) forms the spring portion (8).

6. A leaf spring according to any one of claims 2 to 5, **characterised in that** the bendable joint portion (11) comprises the second spring leg (6).

7. A leaf spring according to any one of claims 2 to 6, **characterised in that** the second spring leg (6) is shorter than the first spring leg (5).

8. A leaf spring according to any one of claims 2 to 7, **characterised in that** the second spring leg (6) is arranged substantially perpendicularly relative to the first spring leg (5).

9. A leaf spring according to any one of the preceding claims, **characterised in that**, in the region of the transition portion (7) and optionally in the region of the first spring leg (5), the leaf spring comprises a necking (12).

10. A leaf spring according to any one of the preceding claims, **characterised in that** the leaf spring (1) is produced so as to form one piece.

11. A leaf spring according to any one of the preceding claims, **characterised in that** the leaf spring (1) is produced by a pressing process out of uni-directional prepregs with a duro-plastic or thermo-plastic matrix.

12. A leaf spring according to any one of the preceding claims, **characterised in that** a bending load transversely to the longitudinal direction of the leaf spring (1) and a tensile load in the longitudinal direction of the leaf spring (1) is generated in the leaf spring (1) upon load-related deformation.

13. A leaf spring according to any one of the preceding claims, **characterised in that** the leaf spring comprises exactly one bendable joint portion (11).

14. A leaf spring according to any one of the preceding claims, **characterised in that** the first end (2) and the second end (3) of the leaf spring (1) are formed as tongue-shaped, spring-eye-less end regions.

## Revendications

1. Ressort à lame pour véhicules automobiles composé d'un matériau plastique renforcé avec des fibres, le ressort à lame absorbant des forces de guidage latérales se produisant le cas échéant et pouvant transmettre à un dispositif de réception à ressort à lame, **caractérisé en ce qu'**une première extrémité (2) et une deuxième extrémité (3) du ressort à lame (1) sont fixées de manière solidaire au couple et au déplacement dans un dispositif de réception à ressort à lame (4) et **en ce que** le ressort à lame (1) comporte une section articulée sollicitée en flexion (11), qui peut compenser une variation de longueur d'une section de suspension (8) du ressort à lame (1) lors de la déformation de la section de suspension (8), conditionnée par la charge.

2. Ressort à lame selon la revendication 1, **caractérisé en ce que** le ressort à lame (1) comporte une première branche de ressort (5) et une deuxième branche de ressort (6), qui sont reliées l'une à l'autre par une section de transition (7).

3. Ressort à lame selon la revendication 2, **caractérisé en ce que** la première branche de ressort (5) et la deuxième branche de ressort (6) sont à un état non chargé respectivement à peu près planes.

4. Ressort à lame selon la revendication 2 ou 3, **caractérisé en ce que** la première branche de ressort (5) et la deuxième branche de ressort (6) sont disposées dans un angle l'une par rapport à l'autre.

5. Ressort à lame selon l'une quelconque des revendications 2 à 4, **caractérisé en ce que** la première branche de ressort (5) forme la section de suspension (8).

6. Ressort à lame selon l'une quelconque des revendications 2 à 5, **caractérisé en ce que** la section articulée sollicitée en flexion (11) contient la deuxième branche de ressort (6).

7. Ressort à lame selon l'une quelconque des revendications 2 à 6, **caractérisé en ce que** la deuxième branche de ressort (6) est plus courte que la première branche de ressort (5).

8. Ressort à lame selon l'une quelconque des revendications 2 à 7, **caractérisé en ce que** la deuxième branche de ressort (6) est orientée à peu près perpendiculairement à la première branche de ressort (5).

9. Ressort à lame selon l'une quelconque des revendications précédentes, **caractérisé en ce que** le ressort à lame (1) comporte un rétrécissement (12) dans le secteur de la section de transition (7) et le cas échéant dans le secteur de la première branche de ressort (5).

10. Ressort à lame selon l'une quelconque des revendications précédentes, **caractérisé en ce que** le ressort à lame (1) est fabriqué en une seule pièce.

11. Ressort à lame selon l'une quelconque des revendications précédentes, **caractérisé en ce que** le ressort à lame (1) est fabriqué au moyen d'un procédé de compression à partir de préimprégnés unidirectionnels avec une matrice duroplastique ou thermoplastique.

12. Ressort à lame selon l'une quelconque des revendications précédentes, **caractérisé en ce que** dans le ressort à lame (1) lors de la déformation conditionnée par la charge, il se produit une charge de flexion transversalement à la direction longitudinale du ressort à lame (1) et une charge de traction dans la direction longitudinale du ressort à lame (1).

13. Ressort à lame selon l'une quelconque des revendications précédentes, **caractérisé en ce que** le ressort à lame (1) comporte exactement une section articulée sollicitée en flexion (11).

14. Ressort à lame selon l'une quelconque des revendications précédentes, **caractérisé en ce que** la première extrémité (2) et la deuxième extrémité (3) du ressort à lame (1) sont configurées comme secteurs d'extrémité en forme de languette, sans oeillet de ressort.
